# EUROPEAN PATENT APPLICATION

(11) **EP 3 005 866 A1**
(43) Date of publication of application: **13.04.2016**
(21) Application number: 15800704.7
(22) Date of filing: 22.06.2015
(51) Int. Cl.: A01K 61/00, A01G 31/02

(54) **URBAN TYPE BIOFLOC CULTURE AND PLANT CULTIVATION SYSTEM USING AQUAPONICS**

(30) Priority: 13.08.2014 KR 20140104897; 06.11.2014 KR 20140153766
(71) Applicant: Republic Of Korea (National Fisheries Research And Development), Gijang-gun, Busan 619-705 (KR)
(72) Inventor: KIM, Su Kyoung, Incheon 400-420 (KR); JANG, In Kwon, Busan 612-885 (KR); LIM, Hyunjeong, Incheon 406-840 (KR)
(74) Representative: Regimbeau
(86) International application number: PCT/KR2015/006284
(87) International publication number: WO 2016/024713

(57) **Abstract**

The present invention relates to a closed recirculating aquaponics system combined with a biofloc tank for symbiotic breeding of aquatic species and plant species, wherein the culture water for growing aquatic species is transferred to a plant growing apparatus, organic material in the culture water is used as nutrients for plant species and the water is purified in the plant growing apparatus, and purified water is reused as culture water for aquatic species. The present invention facilitates symbiotic breeding of aquatic species and plant species without any need of culture water exchange, reducing cost for production and enhancing production efficiency.

## Description

### Field of Technology

The present invention relates to closed recirculating aquaponics system using biofloc technology. More specifically, the invention provides an inland aquaponics system using biofloc technology, wherein culture water including waste products from aquatic species is firstly purified with micro-organisms in a biofloc tank, transferred into an aquaponics plant growing apparatus where the waste products in the culture water are used as nutrients for plant species, to be secondly purified, and then directed back to be recycled as culture water for growing aquatic species, so that ecofriendly purification becomes available and integrated culture of aquatic species and plant species can be efficiently performed.

### Description of the Prior Art

In many instances, the inland tank type or open-pond type aquacultures need continuous supply and discharge of culture water where the culture water quality is degraded due to waste products from feed or excrement from aquatic species and eutrophication caused by influx of nitrate and phosphate from the environment. Since the treatment of these waste products costs a lot, a large portion thereof is discharged into river or underground without being treated in the proper purification facilities.

The conventional method of enhancing culture water quality is either chemical or physical. The chemical method comprises inhibition of proliferation of algae by introducing chemicals like photosynthesis restrainer, herbicide, and weed killer, and sedimentation of remainder by inputting coagulants, etc. This method is only available by periodically injecting chemicals, leading disadvantages such that aquatic species in aquacultures cannot grow normally and food safety is not secured.

The physical method of purifying culture water by circulating culture water with a filter needs frequent exchange of filters which are rather expensive. And another method of establishing facilities for coagulation, sedimentation and purification, wherein the waste in the culture water is coagulated with polymer coagulant, sedimented, and dewatered in the filtration system, requires large sized land, large amount of initial investment for installment, and continuous expense for operation.

By the way, the demand for organic and biologically safe food is getting higher as doubt for food safety is growing resulting from industrialization and environmental pollution. Amid this, the producers in rural area working in agriculture and fisheries experience increasing difficulties by domination of WTO system and enforcement of the FTA.

Accordingly, the development of inland aquaculture system is necessary for enabling aquaculture in urban area distant from water resources like sea or water, so that novel income resources for farmers and fishers are developed, competitiveness due to technical enhancement becomes possible, and the instability of aquaculture production caused by natural disaster is diminished.

Thanks to recent advance of aquaculture technology, the culture technology of aquatic species in inland culture tanks is established and further, a composite building aquaculture appears in urban area, where a variety of aquatic species are cultured in vertically stacked or horizontally arranged culture tanks established in a building or a structure.

The composite building aquaculture directs integration of Information Technology and aquaculture, by which various aquatic species are cultured under automation and unmanned system, to facilitate separate management of individual layers and tanks and to prevent diseases from being proliferated. In addition, separation culture dependent on the size and kind of the species is available, and high yield and control of harvesting period are possible, resulting in adding value to the product.

However, in order to accomplish the composite building aquaculture, the technology for recycling culture water polluted in aquaculture should be developed. Accordingly, there have been lots of efforts for developing this technology.

As one of them, the biofloc technology does not require water exchange and water treatment, since aquatic species are cultured with nutrient micro-organisms, and the micro-organisms purify water by digesting organic waste in the culture water in a tank faster than algae by 10-100 times, so that the digested organic waste is recycled back to be nutrient feed of aquatic species.

However, there is limitation in a conventional culture water purification system using current biofloc technologies such that new culture water needs to be continuously supplied and a proper means to stabilize culture water purification efficiency is required since the purification efficiency is dropped with increase of the number of the species disposed in a tank. Recently, people are interested in the aquaponics system in which culture water can be recirculated without being exchanged for the purpose of overcoming the above mentioned limitation ultimately.

Aquaponics is an integrated technology of aquaculture and hydrophonics, characterized in raising aquatic species in a tank, recirculating pollutants affecting water quality such as fish feces and feed remainder to supply for plant species, wherein plant roots absorb nutrients from organic materials which are originally fish feces and feed remainder dissolved in water and purify ammonia harmful to the aquatic species, and directing clean water back to the aquatic species.

An Aquaponics system contains environmentally effective micro-organisms as well as plant and aquatic species for decomposing or converting pollutants such as ammonia, nitrous acid, etc. to organic materials and using the resulting material as feed for aquatic species. When healthy and stable ecosystem including micro-organisms, phytoplankton, zooplankton, and aquatic species is retained, any foreign pathogens cannot cause diseases in the system, since environmentally effective micro-organisms are dominant therein.

In addition, the aquaponics system is being increasingly recognized as a system which can reduce environmental pollution resulting from culture water discharged from conventional aquaculture. When the culture water containing fish feces and feed remainder is drained out of the aquaculture, the river and seashore are polluted and eutrophication occurs inducing water-bloom or red-tide requiring a lot of expense to get rid of.

Using the aquaponics system, which is a closed recirculating aquaculture system, excess feeds and excrement of aquatic species are converted to natural organic material by environmentally effective micro-organisms and reused, and the ecosystem including plant species, phytoplankton, zooplankton, and aquatic species is in the equilibrium, decreasing the amount of waste water and improving environmental condition.

And the aquaponics system is also ecofriendly, boosts energy and feed efficiency, and allows a stable production and supply system of organic plant and aquatic products throughout a year without environmental and geological limitation.

The general structure of aquaponics systems comprises a tank for housing at least one aquatic species, a pump transferring culture water in the tank to a plant growing apparatus, and the plant growing apparatus for housing at least one plant species growing in an aqueous environment.

However, high cost required in building these style culture systems makes it difficult to convert conventional aquaculture into an aquaponics system, i. e. rearrangement of a plant growing apparatus, etc.

### DETAILED DESCRIPTION OF THE INVENTION

### The problem to be solved

In order to solve the problem posed, there is provided a closed recirculating biofloc aquaculture system for aquaponics, wherein the culture water drained out of composite aquaculture tank for aquaculture building complex using a biofloc system is firstly purified with micro-organisms with biofloc technology, secondly purified after being transferred into aquaponics plant growing apparatus where the waste products in the culture water are used as nutrients for plant species, and then directed back to be recycled as culture water for growing aquatic species.

### Summary of the Invention

According to a first aspect of the present invention, the present invention, to address the problems posed above, provides inland BioFloc aquaculture system wherein the culture water firstly purified in a BioFloc tank by means of micro-organisms is supplied into aquaponics plant growing apparatus, where the culture water is secondly purified in ecofriendly manner such that the organic material remaining in the culture water is used as nutrients for plant species, and the purified water is directed back to the aquaculture.

In a related aspect, the present invention provides a biofloc system and aquaponics plant rearing system including: a monitoring system which monitors breeding of aquatic species and plant species and a biofloc tank positioned in a double layer frame of the biofloc system, the biofloc tank being connected with a reservoir tank in which sludge generated in the biofloc tank is filtered and reused.

The biofloc tank is in connection with a cooling reservoir tank having a cooling unit and a heating reservoir tank having a heating unit, in order to transfer to the aquaponics plant growing apparatus discharged from the biofloc tank after being adjusted in a predetermined temperature. The biofloc tank includes an automatic feed supplying system at one side. Also, the biofloc tank or reservoir tank includes an agitating system equipped with a submersible pump and an agitator, and an air supplying apparatus.

The aquaponics plant growing apparatus comprises at least one culture bed installed in a sealed space selected from deep-flow technology culture bed, nutrient film technology culture bed, and a seedling culture bed. And the monitoring system includes a water quality analyzer of the biofloc system, and a thermo-hydrostat and a lux meter of the aquaponics plant growing apparatus, which are controlled and operated by the monitoring system.

The air supplying apparatus comprises an air blower in a linear or closed polygonal shape deployed at the bottom surface of a biofloc tank; and a circulating filtering device including a protein skimmer equipped on one side of the biofloc tank.

The present invention provides a circulation-filtering aquaponics plant growing system, wherein a culture bed for growing plant species with culture water is rotatable around the horizontal axis penetrating the culture bed by installing a weight at its lower portion, to thereby grow edible or ornamental plant species using culture water of aquatic species and at the same time filtrate or purify the culture water to reuse for growing aquatic species.

The upper portion of the culture tank may include: a culture shelf comprising one or more of culture pot insertion holes for disposing plant species therein and a plant culture water pipe insertion hole for penetratingly receiving a plant culture water pipe, the plant culture water pipe supplying culture water into both sides of the culture tank and working as a horizontal rotating axis of the culture tank; and a root receiving trough detachably engaged on the lower portion of the culture shelf for receiving plant roots and culture water, wherein the culture water pipe formed at the both lateral outer portions of the culture tank and providing culture water is wrapped with floating material for making the culture tank floated, the culture tank includes a culture shelf and a root receiving trough, and each component can be selected and arranged depending on the kind of plant species to be grown therein.

A plurality of the culture tanks are connected along a culture tank arranging axis formed on the outer surface of the culture tank, and the culture tank arranging axis is deployed horizontally, vertically, or obliquely from the ground in order that the plurality of culture tanks are arranged in a single floor, a stairway-type arrangement, or ladder type arrangement and the height of the culture tank can be adjusted for controlling the submerging degree of roots.

### The Effect of Invention

The present invention is a closed circuit aquaponics system where the culture water discharged from a biofloc culture tank is engaged with a symbiotic rearing system, utilizing organic material prior to decomposition by micro-organisms for growing plant species as well as purifying water simultaneously and reusing the purified culture water for aquatic species, which makes installment of a separate water purification tank unnecessary, reduces the production cost, and maximizes the production efficiency.

The present aquaponics system facilitates the efficient use of limited space of culture area since the culture tank can be rotated around a horizontal axis, allowing the plurality of culture tanks arranged in a single floor type, a ladder type, or stairway-type depending on the arrangement of the culture tank arrangement axis which may be horizontal, vertical or oblique. In a related aspect, the outer frame of the culture tank is wrapped with floating material, so that the plurality of culture tanks can be converted into single floor type floating culture tank assembly where plant breeding and purification of culture water are simultaneously performed without any separate space in the culture area. Also the plurality of culture tanks can be stacked into a multi-floor structure and can be spread horizontally, floating on the water surface, to thereby be used in inland aquacultures or outdoor pond, wherein continuously accumulating nitrate nitrogen in culture water is removed so that the culture water can be reused.

### Brief Description of the Figures

Figure 1 depicts one embodiment of a biofloc system in accordance with the current invention (identical to Fig. 2 of Korean Patent No. 10-2014-0104897).
Figure 2 is a conceptual diagram of emergency oxygen supplying system (identical to Fig. 3 of Korean Patent No. 10-2014-0104897).
Figure 3 depicts one embodiment of an aquaponics plant breeding system in accordance with the current invention (identical to Fig. 4 of Korean Patent No. 10-2014-0104897).
Figure 4 is a perspective view of a culture pot and a culture tank of an aquaponics plant growing system in accordance with the current invention (identical to Fig. 2 of Korean Patent No. 10-2014-0153766).
Figure 5 is a perspective view of a culture tank which is rotatable around a connecting axis when the culture tank is connected to a culture water pipe (identical to Fig. 3 of Korean Patent No. 10-2014-0153766).
Figure 6 is a perspective view depicting the connection structure of aquaculture tank, culture tank, and a pump, in accordance with the current invention (identical to Fig. 4 of Korean Patent No. 10-2014-0153766).
Figure 7 is a perspective view of a vertical type aquaponics plant growing system, in accordance with the current invention (identical to Fig. 5 of Korean Patent No. 10-2014-0153766).
Figure 8 is a perspective view of a stairway-type aquaponics plant growing system, in accordance with the current invention (identical to Fig. 6 of Korean Patent No. 10-2014-0153766).
Figure 9 is a perspective view of a horizontal-type aquaponics plant growing system, in accordance with the current invention (identical to Fig. 7 of Korean Patent No. 10-2014-0153766).
Figure 10 is a perspective view of a root receiving trough in accordance with the current invention (identical to Fig. 8 of Korean Patent No. 10-2014-0153766).
Figure 11 is a perspective view of a culture shelf in accordance with the current invention (identical to Fig. 9 of Korean Patent No. 10-2014-0153766).

### The Best Mode of Invention

### I. The Biofloc System

The biofloc system of the present invention comprises: a structural frame having a plurality of floors formed in a predetermined size and depth; and a tank frame (20) having a biofloc tank (10) and a reservoir tank (30) in connection with a drainage pipe formed in the tank, an automatic feed supplying system (40), a reservoir cooling system (50), a reservoir heating system (60), an air supplying apparatus (70), and agitating system (80).

### 1. The Biofloc Tank

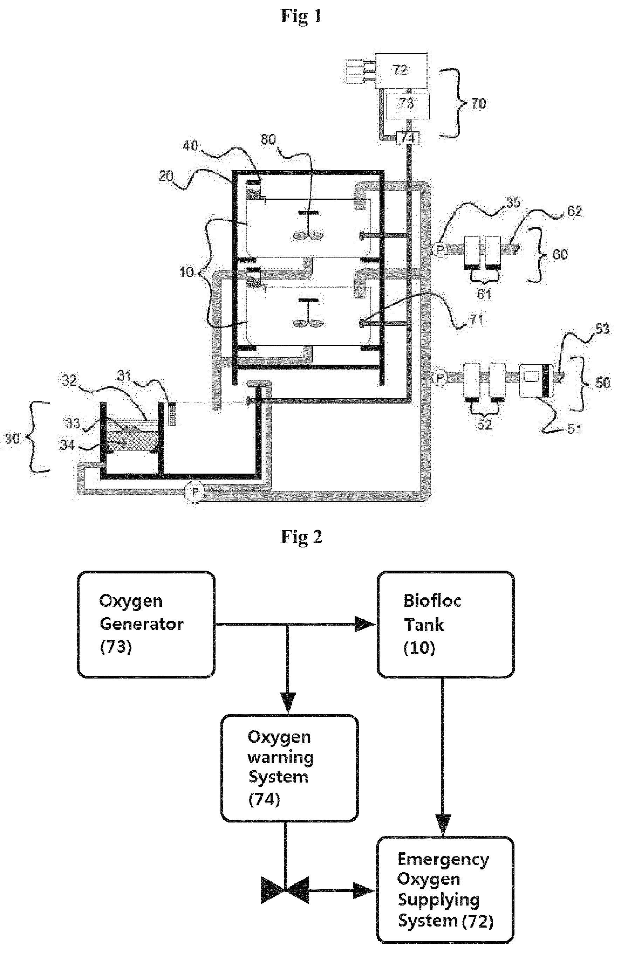

Figure 1 depicts an embodiment of a biofloc system in accordance with the current invention. The biofloc tank (10) of the present invention is provided for the biofloc aquaculture, which is made of fiber glass as a main supporting material which does not elute biologically harmful material and is corrosion resistant. The biofloc tank (10) of the present invention is a plant structure with oxygen or air elevation system.

The size of the tank is desired to be 5000L x 1,500 x 1,00 (700)Hmmx8T and the diameter of the outlet pipe is to be 75A. The tank is of a track shape wherein partitions between the tracks should be solid and need to be reinforced to prevent from being curved.

The structure of the tank may have a round shaped edge to prevent solids from being accumulated, a bottom support reinforced enough to endure appropriate water pressure, and a mold for supporting the entire structure. The final inner structure of the tank including inner supporting material should be gelcoated in entirety and reinforced with a flange with an appropriate thickness to prevent possible distortion or rupture on the outer surface, and the outer surface of the tank should be reinforced with a flange with an appropriate thickness to prevent possible distortion or rupture. The tank is equipped with a UV-coated acrylic transparent window enabling the observation of the species' condition from the outside.

The tank is made of fiber glass as a main supporting material and layered and cured unsaturated polyester resin, and gel-coated, so that the tank is strengthened and secured from elution of toxic material to aquatic species (510) to protect aquatic species.

The process of manufacturing the tank comprises the steps of: sanding for completely removing rust or impurities generated on the surface of the structure with a sanding grinder or sandpaper and softening the surface in a dry state; impregnating by applying a resin liquid to the surface and layering a glass fiber on the resin applied surface so that the resin liquid is sealably disposed on the structure; laminating in order to form a resin layer with glass fibers in a certain depth by repeating the step of impregnating; and forming a surface protection layer by FRP gel-coating with unsaturated polyester resin aimed for surface coating integrally with the previously formed resin layers.

The step of sanding may include a primer treatment (using adhesive) depending on the circumstances. In the step of impregnating, glass fibers need to be located on the structure in a uniform direction, and pressed with a roller while preventing the glass fibers from scattering or being damaged and removing remarkable foam on the coated surface, and pressed with an iron roller to ensure the flat surface without surface foam.

### 2. The Biofloc Structure Frame

The structure frame of the present invention is double floored track tank, where the frame comprises a first floor and a second floor and the distance between the vertical rods is at least 3 meters ensuring the working space at the first floor. The structure frame is desired to be sus304 and of a size of 5000L x 1,500W x 3,200Hmm and the interruption portion should be minimized for ensuring the working space of the first floor.

The structure frame is built by a bending process, a pressing process, a cutting process, and a panel unit molding and treatment process. During the above process, the welding portion needs to be treated for inhibiting corrosion by spraying sus after welding process and stainless steel should be cautiously treated in raw material storage, treatment, and delivery, not to make flaw or scratch thereon.

### 3. Reservoir Tank

The present reservoir tank (30) is a kind of a sedimentation tank wherein sludge generated in a biofloc tank (10) is transferred. In the reservoir tank (30), air and oxygen is provided to biologically activate sludge and filtrate, to thereby recycle the sludge. The reservoir tank (30) has a submersible pump (35) with a coupling for supplying purified water into the tank when necessary.

In the inner cavity of the reservoir tank (30), a filter module (34) supporting frame and a filter module (34) are located, where purified water passing through a biofilter (32) overflows and is filtrated. And a submersible pump (35) indicated with the lowest water level is installed and a coupling is provided in an outlet valve on both ends of the piping line, so that purified culture water is in fluid connection with a biofloc tank (10). An overflower and a drainage are necessary to prevent culture water from overflowing.

The reservoir tank (30) is desirably PVC and of a size of 2000 x 1000 x 800Hmm, and comprises a filter module (34) in which the degree of filtering is adjusted to be 10MU arranged in an order of lower density, middle density, and high density. And it is adequate to modify the environmental condition to proliferate bacteria.

In the structure of the reservoir tank (30), proper pipeline should be mounted for introducing sludge generated in the biofloc tank (10) and supplying original seawater and fresh water; inflow controlling plate is mounted in the inner cavity; and a bio filter is also mounted for filtering floating solids and sludge.

The biofilter (32) of the reservoir tank (30) comprises an air diffuser (33) for aeration so as to supply pure oxygen and activate micro-organisms, and may comprise a dissolving diffuser (33) for dissolving supplied pure oxygen.

### 4. Automatic Feed Supplying System (40)

The automatic feed supplying system (40) is mounted on the positioning frame on the upper portion of the tank with a purpose of providing the tank with a desirable amount of feed in a predetermined time, the automatic feed supplying system (40) comprising an automatic feed supplying system (40) controller, where the amount of feed determined according to the type of the aquatic species (510) is input and preset by means of a panel controller and the data concerning feed amount and feed remainder is input thereto and considered.

The present automatic feed supplying system (40) may be made of acrylic material on which rust is not readily generated and the electronic control device or additional components shall be prevented from being exposed in the outer environment since the present automatic feed supplying system (40) is constantly exposed to salt in a tank having high humidity.

The feeding amount of the present automatic feed supplying system (40) is 3L and the number of feeding and the time of feed can be arbitrarily adjusted in the range of 1 to 99 times, and the size of the feed can be arbitrarily adjusted.

The method of controlling the present automatic feed supplying system (40) may be one selected from a determined amount control controlling the predetermined amount controller based on the number of rotation, a dispersing control considering feeding time according to a timer and the number of feeding, a motor control controlling digitally with DC 12V control, and an operation time control in which the feeding time can be preset in seconds, wherein the automatic feed supplying system (40) is connected to a monitor system with a lead cable of 5M.

### 5. A Reservoir Cooling and Heating System

### A) A Reservoir Cooling System (50)

The present reservoir cooling system (50) is configured to provide an aquaponics culture tank(100) with culture water from the biofloc tank (10) in a predetermined temperature, wherein a cooling water provided from a cooler (51) made of titanium is made to remain in a predetermined temperature by installment of a pipe line in a tank, and provided to the aquaponics system by means of a low level submersible pump (35).

The cooler (51) made of titanium of the reservoir tank (30) is a device for retaining the condition of culture water of the tank in an optimal condition for the aquatic species (510) in the tank and particularly for retaining the water temperature lower than ambient temperature. As an embodiment, the cooler (51) is made of titanium and has the cooling capacity of 2400kcal, compressor capacity of 1Hp, a pipe diameter of 25mm. Two supplemental tanks are each of a size of 20L and the power is desirably 220V.

The cooler (51) formed in a compact size and design comprises: a pump (300) and a heat exchanger (52) in the inside of the cooler (51) body. The cooler (51) includes a circulation motor for indirect heat exchange in a cooling system in the reservoir tank (30) containing seawater and fresh water, and an automatic controlling system operating based on the temperature. The cooler (51) is air cooling type, reducing noise and being corrosion resistant. The principle of operation of the air cooling type cooler (51) is forcibly ventilating air on the outer surface of the heat pipe using a fan with air as a cooling liquid, operating a heat exchanger (52) when the inner liquid is cooled, and cooling the circulating water.

The heat exchanger (52) installed in the cooler (51) is preferred to be made of titanium and the titanium-based cooler (51) may be insulated in the pipeline and equipped with a bypass. The outer surface of the cooler (51) is of ABS material which is corrosion resistant and readily adaptable in the cooling speed and load change.

All the components of the cooler (51) is preferred to be made of a material which is durable and corrosion resistant against seawater: an evaporator is formed with SUS 316L and titanium tube, durable against seawater; and a control box designed ergonomically and easy to check and operate, operating an alarming light in case of high pressure alarming, overcurrent, shortage of cooling water, and malfunctioning of the cooler (51) and checking whether there are problems, indicating an alarming function using an warning lamp in the possible case of malfunctioning, and coping with temperature changes, cooling speed and load change.

The cooling reservoir tank (30) of the present invention is a buffering reservoir tank (30), which is installed for maintaining water temperature stably so as to transfer a variety of nutrients generated in bioflocs to an aquaponics system. The cooling reservoir tank (30) is conventionally made of PVC and of a size of 1500 x 700 x 1000Hmm. The water tanks of the cooling reservoir are separately arranged for housing seawater and freshwater respectively and mounted with a drain and an overflower, respectively. The water tank comprises a valve conduit for supplying nutrients from the biofloc tank (10) to freshwater tank and seawater tank respectively, and a dispersing unit for aeration in the reservoir tank (30), leading the original water resource supplied in the freshwater tank and seawater tank to a cooling reservoir tank (30) by installing a support frame thereon.

A heat exchanger (52) is installed at the inner bottom surface of the water tank. The heat exchanger (52) is preferably made of XL pipe or titanium pipe, facilitating sufficient cooling operation, and is desired to install a reinforcing frame, enabling cleaning or replacement convenient. The submersible pump (35) of the cooling system in the reservoir tank (30), made of corrosion resistant material, comprises a low water level sensor attached thereon, and is installed in the inner portion of the water tank, supplying water of a stable temperature into an aquaponics system remaining in connection.

### B) a heating system in the reservoir tank

The present reservoir heating system (60) is characterized in supplying nutrients generated in an aquaponics system to a biofloc system, maintaining water in an predetermined temperature using a titanium-made heater mounted in the reservoir heating tank, and transferring water to a BioFloc system using a pump (300).

The heating portion of the titanium-made heater is formed of titanium which is not corrosive against seawater, and does not directly in contact with the inner portion of the tank. The electric cable connected to the heater is completely sealed for being water-proof, and the titanium heater is provided with a water sensor for detecting the water shortage lower than desired level in the tank and turning on the power, desirably in connection with a temperature controller. In a preferred embodiment, the titanium cooler (51) of the titanium heater has a heating capacity of 2400Kcal, energy of 2KW, two of which can be installed in 20A, the temperature of which is controlled by automatic presetting or digitally, and the electric power of which is desirably 220V, 60Hz.

The seawater pump of the heating system of the reservoir tank (30) is equipped with a strainer enabling the prior purification of culture water filtering large sized solids, comprising a transparent window allowing easy observation of solids and configured to be ring-lock structure which is easy to dismantle or assemble. The seawater pump is integrally formed to be used for both seawater and freshwater, made of a corrosion resistant thermoplastic, and parallelly arranged to minimize load resulting from continuous operation for 24 hours yearly.

As an embodiment, the present seawater pump is formed with maximum capacity of 16cm3/hr, maximum lift of 17m, a pipe diameter of 50mm, and an operating power of 220/110V, 0.5Hp and it is adequate to install 2 units thereof. The present seawater pump comprises: a body motor including a strainer, a strainer cover, and a strainer housing; a seal housing; a motor housing bracket; a moter base diffuser (33); a shaft seal; a shaft seal; an impeller; and a ring-lock engineering PP easily separating foreign materials.

The portion including a strainer and an impeller of the present seawater pump may be disassembled without any need of any additional tools, a strainer for prior purification is attached, a transparent cover is mounted, and a check valve may be installed. The heating reservoir tank (30) in the reservoir heating system (60) is a buffering reservoir tank (30), which is installed for maintaining water temperature stably so as to transfer a variety of nutrients generated in bioflocs to an aquaponics system. The heating reservoir tank (30) is conventionally made of PVC and of a size of 1500 x 700 x 1000Hmm.

The heating reservoir tank (30) is separately arranged for housing sea water and seawater respectively and mounted with a drain and an overflower, respectively. The water tank comprises a valve conduit for supplying nutrients from aquaponics system to freshwater tank and seawater tank respectively, and a dispersing unit for aeration in the reservoir tank (30). In the inner cavity of the water tank, a low water level sensor is attached and a seawater pump formed with corrosion resistant material is mounted, which is in connection to the biofloc tank (10) and supplies water.

### 6. An air supplying system and an agitating system (80)

The air blower (71) of the present air supplying system, aimed to provide a biofloc tank (10) and reservoir tank (30) with air, is desired to be operated and manipulated simply, formed in a compact size, and easily managed and fixed in any circumstances. And it is also preferred to be constructed to minimize hydrodynamic heat, noise, vibration, etc. generated in air insertion and discharge. The ring brower is of 0.15KW in operating power, 220V and 60Hz in power, 0.2Kg/cm² in constant pressure, and 150LPM in airflow. The type of the ring blower (71) is diaphragm type, and a pipe diameter thereof is 16A.

The casing and vibration of the blower (71), as of consisting of ROD supported between two diaphragms vibrating in right and left directions, are durable even with persistent use, energy-efficient due to the structure using electric vibration without mechanical friction, and driving efficiently due to high capacity. Upon installment, the blower (71) needs to be designed to minimize noise in a circuit having air flowing therein and a vibrating portion.

The blower (71) is configured to adjust the blowing amount of air discharge against pressure to make continuous operation possible in performance monitor and rated current to easily assemble and disassemble main components like a cover, a casing, etc. by being integrally mounted with a pipeline and auxiliary apparatuses, and to supply purified air without the need of provision of fuel due to the non-existence of mechanical friction.

In addition, the present blower (71) has low consumption of electricity because of using electric vibration, not using mechanical friction, supplies stable amount of strong wind using a small-sized vibrator of a complete equilibrium made by installing two electronic magnets operating in a permanent magnet. The diffuser (33) of the air supplying system comprises a transparent hose having a size of 8 X 11mm, an oxygen branch having 8X6 holes, and a diffuser (33).

Figure 2 depicts a conceptual graphic for the emergency oxygen supplying system (72) in accordance with the present invention. The present emergency oxygen supplying system (72) monitors the normal operation and oxygen suppling condition of the system when the system is normally operating, prevents possible accident by automatically supplying oxygen in case of problems such as lower oxygen density, oxygen leak, blocking oxygen, and additionally supplies oxygen by opening a valve manually when oxygen is insufficient.

The agitating system (80) agitates bioflocs in water by mounting a submersible pump (35) mixer within a biofloc tank (10) in order to prevent sedimentation and improve water flow. The submersible pump (35) of the agitating system (80) is made of thermoplastic, preferably having specifications of a capacity of 300w and a discharge flow rate of 120LPM. The agitator of the agitating system (80) is an injector-type, made of ABS, having specifications of a usable pressure of 0.5Kg/cm² or more and suction rate of 3.6m³/hr.

### 7. A Microcirculating Waste Filtering Unit

A microcirculating waste filtering unit stabilizes water quality in the tank by adsorbing underwater protein like feed remainders, dissolved organic matter, feces, bioflocs, etc. and discharging to the outside in the state of foam, so that the microcirculating waste filtering unit decreases load of biological digestion in a circulating filtering unit, increases dissolved oxygen and accommodating density, and improves aquaculture environment. The microcirculating waste filtering unit is characterized in being reused after sterilization following microfiltration, made of corrosion resistant material, and integrally systemized for easy movement with a mounted carrying means.

The biofloc microcirculating waste filtering unit is movable, formed of UPVC/PVC, sized into 1400 x 1400 x 2500Hmm, having a treatment capacity of 15m³/hr, having a filtering capacity of 3mu, having a total operating power of 1.5 Hp, caliber of 50A, and connected with a PVC coupling.

The pump (300) of microcirculating waste filtering unit using bioflocs is equipped with a strainer for straining various large solid waste for firstly purifying the waste water, comprises a transparent window for easily observing solid waste, and is integrally formed for being used for seawater and freshwater due to being configured as a ringlock structure which is easily assembled and disassembled. In addition, it is made of corrosion resistant plastic material, includes a check valve for preventing overflowing, and preferably has maximum flow amount of 26m³/hr and maximum lift of 27m.

The biofloc microcirculating waste filtering unit uses a protein skimmer of Korea Patent No., 10-0983021, wherein the flow amount shall be 15m³/hr or more, the protein skimmer comprising a base and body, a ventury injector, a bubble collection cup, a spray nozzle, a solenoid valve, and a control panel.

The body of the present skimmer is fabricated with PVC/FRP which is corrosion resistant and remained even in a pressure of 3Kg/cm², wherein the organic matter is reacted sufficiently enough to coagulate, and remained in a predetermined flow amount and pressure. The bubble collection cup is made of a transparent material, in a shape of flange for easily separating from the body, and mounted with a control device and a washing device for washing foam collected periodically in a predetermined length of time.

The pump (300) comprises a strainer for straining a variety of solid wastes existing in seawater for the prevention of clogging of an injector nozzle and normal operation, has a ring lock structure having a transparent window and being easy to be assembled and disassembled for removal of solid waste, and comprises an integral engineering PP pump assembled without bolts and nuts which is exclusively for seawater and safe from corrosion and noise. The foam injector is prevented from overflow while using ozone or air, wherein a corrosion resistant fine valve is installed for controlling ozone or air precisely, and the injector should inject air in a predetermined amount, made in corrosion-resistant non-metallic material.

The skimmer which is integrally formed with a pump (300) and a body includes a control valve for maintaining a stable flow amount and water level. The control panel is configured to control all the electric control devices relating to the skimmer, the skimmer formed with a corrosion resistant and waterproof panel.

The filtering device of the biofloc microcirculating filtering unit is directed to a fine filter filtrating by positioning and fixating a filter having a degree of preciseness in the inside of the filtering unit, wherein the filter is easily exchanged due to its screw-like shape and supported by a pp strainer or basket with high durability. The housing is made of PP and it is adequate that the treating flow amount is 10m³ /hr or more. The device comprises a filter base, a filter body, a pressure meter, and an element.

The biofloc microcirculating filtering unit includes a multiple sterilization device, the multiple sterilization device sterilizing microorganisms in seawater operated by irradiating strong sterilizing light for destroying DNA of microorganisms and inhibiting proliferation of microorganisms or algae generating in a tank, in order to prevent fish diseases and maintain stabilization of biological filter device. The multiple sterilization device has a maximum flow treating amount of 23m³/hr, preferably an outlet valve of a diameter of 50mm, the multiple sterilization device being fabricated with corrosion resistant plastic, sterilizing water by disposing a sterilizer in the inside, having a structure without eccentricity, and determining from the outside whether the sterilization is automatically performed or not.

The ozone generator for sterilizing a biofloc tank (10) and disinfection treatment generates ozone using oxygen for pretreatment. The ozone generator sterilizes waste water in culture water by increasing coagulating effect of dissolved organic matters, which is characterized with having generated ozone amount of 10g/hr, ozone concentration of 3-5%, and a discharge pressure of 1kg/cm2 at most.

The structure and operating principle of the ozone is as follows: the ozone generator is made with ceramic plate of discharge tube material manufactured in the presence of reliable high pressure and high temperature without using low efficient glass and pyrex and incomplete ceramic coating.

The applied frequency is middle or high frequency which is not commercial frequency, applied in order to maximize the efficiency of the ozone generator, and the discharging method is a corona discharging method. An air cooling method is used and an oxygen supplying method is by means of supplying oxygen, not oxygen air, since the oxygen air supplying method formulates nitrogen oxide which rapidly lowers functions of an ozone generating tube and ozone concentration. The ozone concentration, which is more or less 3-5%, is adequate for oxygenation

### 8. A biofloc monitoring system

A monitoring system of a biofloc system detects water quality by monitoring physical change in water quality in shrimp aquaculture and water quality analysis. The method of detecting physical change in water quality is changed from water quality analysis to remote supervisory control system to boost the efficiency and cope with sudden water quality change scientifically and reasonably.

The remote supervisory control system contributes to prepare for water quality related accident by installing a supervisory control system in a shrimp aquaculture, real-time monitoring water quality change in a control chamber, and alarming or informing through SMS.

The remote supervisory control system has functions such as monitoring, recording, data storing, and alarming, wherein the monitoring function is to monitor every aspect of communication, measuring value of a measuring unit and additional installments, and to immediately indicate an adequate order to react to poor communications and any kind of abnormal condition.

The recording function includes analyzing data and establishing a report automatically or arbitrarily to leave a report about events causing troubles. The data storing function is to select and store useful and necessary data for operating the system. The alarming function is to generate high-low warning in the case of detecting abnormal concentration while monitoring nonpoint pollution concentration in each sensor, wherein the range of concentration can be adjusted depending on the circumstances.

The monitoring system can monitor water quality by means of communication between RTMS-DL and a main computer in an office using wire communication cable which transfers data in real time. The measuring unit transfers data containing information about water quality in shrimp aquaculture in real time to a water quality control computer, allowing remote control.

### II. Aquaponics plant growing apparatus

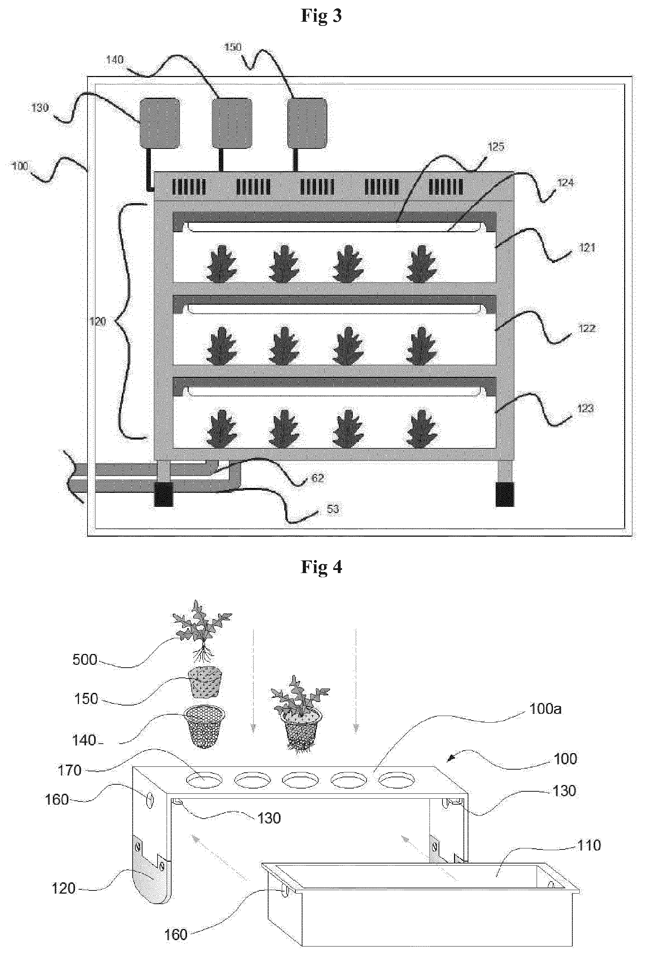

The aquaponics plant growing apparatus comprises an aquaponics culture bed (91) in which plants grows, a composite environmental control system for securing adequate environments for plant breeding, a light control system, and an dew prevention system (99). Figure 3 depicts the structure of the aquaponics plant growing apparatus in accordance with the present invention.

The aquaponics plant growing apparatus is a stacked apparatus including multiple layers of plant culture beds, the outer case (90) of aquaponics plant growing apparatus formed a clean panel having 75T or more than 75T of EPS, thickness of 0.45T, a single layer, and third degree flame-retardancy. The aquaponics plant growing apparatus is coated on the surface with a coating material which is separated from outer environment and durable with operation in high degree of humidity for maintaining the inner cavity of the apparatus clean and disinfected; and sealed with completely sealable non-solidifying sealant (epoxy coating) on its bottom and connection parts, enhancing degree of sealing.

### 1. A Culture Bed

The aquaponics culture bed (91) may be one selected from the group consisting of deep flow technique culture bed (DFT), nutrient film technique culture bed, and seedling culture bed(94). The present aquaponics system comprises 2 sets of deep flow technique culture beds, 2 sets of nutrient film culture beds, and a set of seedling culture beds (94). The light source of culture beds is fluorescent light manufactured to have radiation intensity enough to enhance plant photosynthesis efficiency.

The deep flow technique culture bed applies deep flow technique allowing optimal growing conditions for plants wherein each culture bed is of 4078*740*2000(H) in size and three layers of culture beds are configured.

The nutriculture bed of a shelf-type made of stainless steel needs to be compatible with aquaculture support frame. The shelf of the culture bed shall be strong enough to maintain in a good shape, not to be distorted or curved, even though a human being works thereupon, and shall be completely sealed enough to prevent leakage of culture water.

The nutrient film technique (NFT) culture bed applies nutrient film technique (NFT), wherein each culture bed is of 4078*740*2000(H) in size and three layers of culture beds are configured. The nutriculture bed is consisted of pipelines made of composite PVC wherein the bed and bed cover should be separated for facilitating management of the bed.

In addition, the culture bed needs to be configured to enable plant pots and circular shape aquaculture sponge to be used thereon. The shelf of the culture bed shall be strong enough to maintain in a good shape, not to be distorted or curved, even though a human being works thereupon, and completely sealed enough to prevent leakage of culture water. The shelf and rod of the culture bed shall be made of stainless steel for preventing possible generation of rust.

### 2. A Light Source of Culture Beds

The light source of the culture beds is three wave length fluorescent lamp and a high illumination reflector (96) is applied to increase light radiation. The temperature discrepancy caused by heat load on the lamp needs to be efficiently removed, and the light amount may be 150mol/m²/s or more in PPFD when the distance between light source and the bed is 20cm.

In the seedling culture bed(94), the temperature discrepancy caused by heat load on the lamp needs to be efficiently removed, the light intensity shall be 5000 LUX or higher, and three wave length fluorescent lamp needs to be used. Each culture bed is of 4078*740*2000(H) in size and it is adequate to configure four layers of culture beds. The cable and fluorescent lamps used for culture beds are in compliance with Korean Industrial Standards.

The ballast stabilizer may be an electronic ballast stabilizer for saving energy and expanding the life span of the lamp. The culture bed is adjusted in vertical and horizontal directions by mounting an adjustment frame. The culture bed is manufactured to facilitate fluorescent lamps to be controlled in multi-stages and to be compatible with a light source controller.

The shelf of the culture bed shall be strong enough to maintain in a good shape, not to be distorted or curved, even though a human being works thereupon, and completely sealed enough to prevent leakage of culture water. The shelf and rod of the culture bed shall be made of stainless steel for preventing possible generation of rust. In order to prevent culture water leakage, the shelf is completely sealed, and made is stainless steel because the shelf stores water and other liquids.

The function of controlling fluorescent lamps on culture beds allows the users to arbitrarily and automatically control the intensity of illumination by enabling multi-stage control of fluorescent lamps on culture beds and prescribing LUX adjusting time in 3 stages. The time for turning on or off the fluorescent lamp can be preset arbitrarily.

The light device has stable current wave resulting from homogeneous operation regardless of kind of lamps so as to attain low crest factor, stable light output, and increase of life span of the lamp. In the absence of load, the stabilizer needs to stop electricity generation to prevent power loss or malfunction. The signal is provided previously by turing on on/off signals for 5 to 10 seconds while monitoring the existence of abnormality. While connection or lamp replacement, the lamp is preset to light automatically.

The indoor aquaponics system is equipped with a composite environment control program for changing the breeding environment depending on each plant species, whereby temperature, humidity, photoperiod, and cleanliness are integrally controlled and breeding conditions are investigated.

The plant growing apparatus includes an automated conditioning system operated by systematic control of the composite environment control system, and the data accumulated by the operation of the control system can be monitored by the monitoring system and utilized as data for further study.

### 3. Aquaponics Light Controller

The light controller of the aquaponics system has a light intensity of 150umol/m²/s based on 20cm distance and the time for controlling light intensity is predetermined by 24H digital timer. In accordance with data record of temperature and humidity in a PC, a controller communicable with PC is used and fluorescent lamp is forced to be turned off when the temperature is beyond the desirable maximum temperature.

A function of forcefully turning off the lamp with a purpose of repressing consistent temperature increase by fluorescent lamp, a function of forcefully turning on the lamp when the temperature is below the desirable minimum temperature, a function of controlling light intensity automatically at the time of electricity recovery after power off and a function of operating the system switching day and night by adjusting a timer are provided.

The aquaponics plant growing apparatus has a sealed structure blocked from the outer environment, has a height of 2.5M in its inner portion, and is fabricated from clean (single layer) panel of THK 75mm EPS.

The positive pressure of the plant growing apparatus which is relatively clean is increased and the positive pressure of the facility chamber is decreased, so that air is pushed out of cleaner plant growing apparatus toward less clean facility chamber.

### 4. Composite environment controller (97)

The composite environment controller (97) (concerning temperature, humidity, light intensity, and ventilation) of the present aquaponics plant growing apparatus comprises an environment control function of the inner portion of the aquaponics plant growing apparatus, a control function of a thermo hygrostat, a control function of fluorescent lamp upon culture beds, and a composite function.

The environment control function of the inner portion of the aquaponics plant growing apparatus is for indicating current temperature and humidity inside, predetermining the range of temperature and humidity inside in order to create optimal conditions, alarming in case of breakaway from predetermined range of temperature and humidity, and forcefully turning on/off in case of breakaway from predetermined range of desired temperature for preventing consistent temperature increase and decrease due to the fluorescent lamp.

The thermo hygrostat control indicates the current state of operation of the thermo-hygrostat, controls temperature and humidity according to the time period and registers desirable changes, benefits plant breeding experiments by constructing the plant growing apparatus to have daily temperature range for 24 hours, and alarms in case of malfunction. The thermo hygrostat control of the present invention has a function of rotary operations which equally distributes the operation times for a compressor, a reheating heater, and a hydro-heater pertaining to each respective step, with a purpose of preventing excessive operation of any single components and facilitating alternate operation.

In order to prevent possible overload caused when the electricity is recovered after temporary power off and a plurality of components start operating simultaneously, each component is configured to start with prescribed starting time difference respectively.

The composite environment controller (97) has a function of protecting a compressor wherein when the piping line is long or in the season of winter, the compressor is protected from possible damage due to frequent operations with low pressure, wherein the compressor is automatically switched off in abnormal operation, and wherein the function of malfunctioning compressor is automatically transferred to other compressor when a compressor has a problem in operation.

The function of operating and stopping the controller is provided, comprising: a memory function of stationary state allowing automatic recovery toward the prior condition in power recovery after power off since micom remembers operating state and stationary state; and an automatic reset function for automatically resetting micom when a CPU disposed in micom stops operating thanks to noise, surge electric current, lightning, sudden drop of voltage (input voltage of 98V or less), etc.

The PID function is to remain indoor temperature and humidity constant by periodically changing the range of temperature depending on the degree of predetermined temperature while controlling cooling, heating, humidifying, and dehumidifying.

The duct is conventionally fabricated with zinc iron plate and it is adequate to configure a quadrilateral duct into a low speed duct. In order to induce adequate temperature, humidity and cleanliness for plant breeding in the plant growing apparatus, a duct pipeline formed on the upper portion of the thermo-hygrostat is connected to the ceiling so as to provide air flow into the inner portion by means of a diffuser (33), the duct pipeline being preferably built in a structure of airtight damper for maximizing airtightness.

The dew prevention system (99), aimed to perform experiments concerning plant breeding, seedling, plant domestication, etc., maintains temperature and humidity constantly and continuously. The dew prevention system (99) minimizes discrepancy in temperature and humidity using a hot gas bypass method and is operating in the range of temperature discrepancy of±0.2°C and the range of humidity discrepancy of ±5%. Beyond the limit of conventional thermo-hygrostat, the present thermo-hygrostat recovers waste heat discharged to the outside and reuse it, resulting in decreasing energy consumption, and optimizes the state of a compressor by bypassing coolant gas, resulting in expanding the life span of the apparatus.

The composite environment controller (97) adjusts temperature, humidity, and light intensity, providing optimal and adequate environment for plant breeding by means of P.I.D control. The compensation and revision of interior temperature is performed by direct hot-gas by-passing using an evaporator with discharged gas (overheated vapor) from a compressor in a standard refrigeration cycle without using an electric heater, so as to enhance indoor air quality of the plant growing apparatus, to thereby configure stable breeding condition for plant species sensitive to temperature, humidity, light, and airflow out of changeable outer ambient conditions.

### III. Aquaponics Plant Growing System

The present aquaponics plant growing system is a circulation-filtering aquaponics plant breeding system to grow edible or ornamental plant species using culture water of aquatic species (510) and to purify the culture water simultaneously for reusing the purified water as culture water for aquatic species (510), wherein a culture bed for growing plant species with culture water is rotatable around the horizontal axis penetrating the culture bed by installing a weight at its lower portion.

Figure 4 is a perspective view depicting the culture pots and the structure of culture beds in accordance with the present invention. The culture pots are filled with filler (150), and plant species, plant seedling or seeds are planted therein. The filler (150) is artificial soil like rock wool, coco peat, perlite, etc. or sponge or styrofoam. The artificial soil may easily support plant roots and partially strain solid waste in culture water. The culture pot is made of membrane sheet having a superior penetrability to allow culture water to reach the plant species sufficiently. The culture pot housing plant species, plant seedling or seed is positioned in a culture shelf formed with one or more culture pot insertion holes (170) wherein the culture pot is held on its upper end.

The both lateral surface of the culture shelf has plant culture water pipe (210) insertion holes (160) through which a plant culture water pipe (210) is inserted, so that plant culture water is provided through the plant culture water pipe (210) which is branched off the culture water pipe (200). On both distal ends of a lower surface portion of culture shelf, an engaging portion of a root receiving trough for engaging a root receiving trough on the lower end portion of the culture shelf is formed so that a root receiving trough can be selectively engaged depending on the plant species and breeding condition therefor and separated in accordance with circumstances for easily removing sludge accumulated on the inner bottom surface.

The plant culture water pipe (210) insertion holes (160) are formed on both lateral sides of the root receiving trough directly facing the plant culture water pipe (210) insertion holes (160) on the culture shelf. Thus the plant culture water pipe (210) is inserted into assembled culture tank (100) penetrating the culture shelf and the root receiving trough, in order ro irrigate plant culture water in the root receiving trough. A border made of silicone or rubber can be mounted on the periphery of the plant culture water connection hole and the root receiving trough when necessary, so as to prevent leakage of plant culture water.

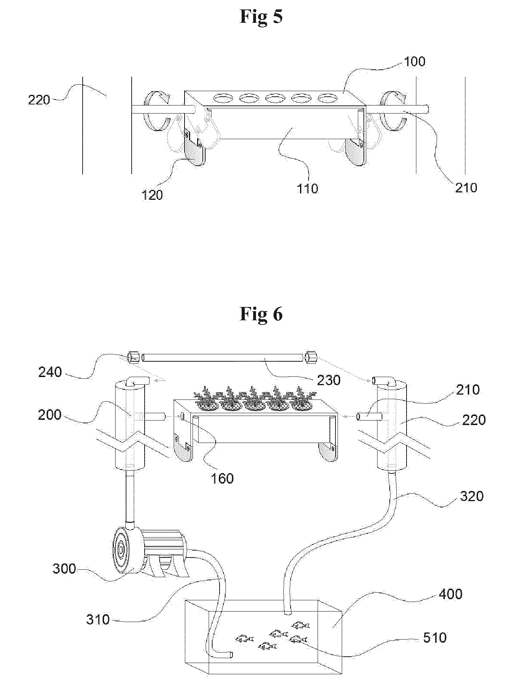

Figure 5 is perspective view of a culture tank (100) displaying that the culture tank (100) is rotatable with a connection axis when the culture tank (100) is connected with the plant culture water pipe (210) which is branched off the culture water pipe (200). The plant culture water pipe (210) operates as an axis supporting the culture tank (100) when the plant culture water pipe (210) is engaged with the plant culture water pipe (210) insertion hole (160), and the culture tank (100) is rotatable along the above axis backward and forward, wherein a culture tank (100) weight is formed on the lower end of both
lateral side of the culture shelf, helping the plant species located on the upper part in case of rearrangement of the culture tank (100) depending on environments and structure of aquaculture. The culture tank (100) weight is made of metal or highly concentrated thermoplastic and is configured to be heavy enough to maintain the culture tank (100) facing upward even when the culture pots housing plant species are inserted and the plant culture water is irrigated into the root receiving trough through the plant culture water pipe (210). As described above, the culture tank (100) is rotatable with an central horizontal axis, so that a plurality of culture tanks (100) connected along the culture tank (100) arrangement axis can be arranged in vertical structure, horizontal structure, or stairway type structure depending on environmental and structural conditions of aquaculture systems.

Figure 6 is a perspective view depicting the connection structure of aquaculture water tank, culture tank (100) and a pump (300). The culture water lifted from aquaculture water tank through an inlet conduit (310) of the pump (300) is transferred to the culture water pipe (200) and irrigated to the culture tank (100) through the plant culture water pipe (210) which is branched off the culture water pipe (200). The present aquaculture water tank may be indoor or outdoor culture tank (100) for aquatic species (510), however, the present aquaculture water tank is biofloc aquaculture tank in the embodiment of the present invention. The inlet conduit (310) of the pump (300) shall be attachably located on the inner bottom portion of the aquaculture water tank for facilitating circulation of culture water in the aquaculture water tank, preventing sludge from accumulating on the bottom portion of the aquaculture water tank, and improving decomposition and filtration of organic material contained in the culture water, and the outlet conduit (320) is preferably directed downward from the upper portion of the aquaculture water tank generating bubbles.

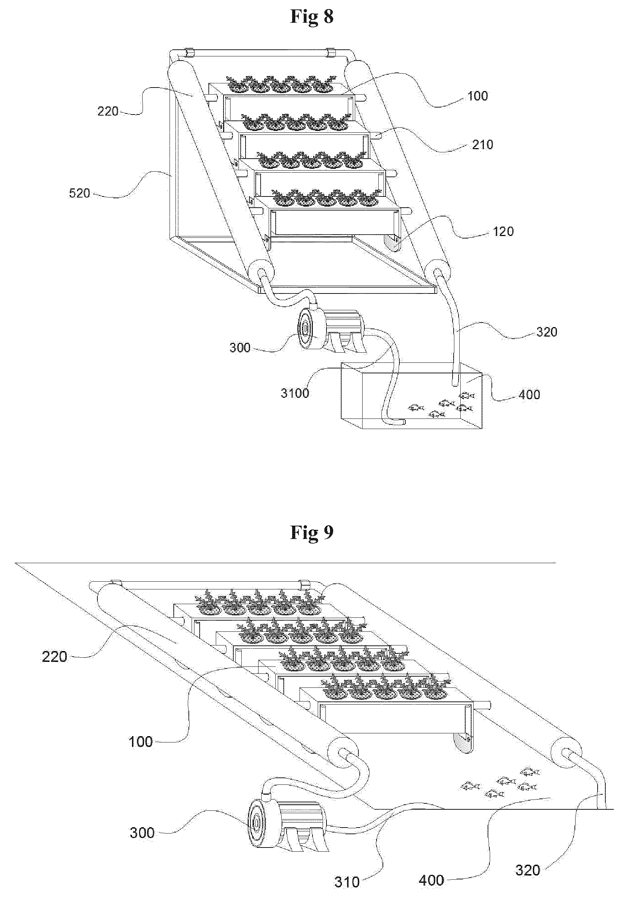

The outer portion of the above culture water pipe (200) is wrapped with a floating material (220) to allow the culture tank (100) to be floated upon the water surface in its entirety as shown in Figure 8. The present aquaponics system is able to yearly provide organic agro-fishery product stably without being affected by natural environment and geological conditions, since the water temperature is adjusted to be stable even in autumn and winter seasons, wherein when culture water is heated, the plant culture water for plant species is heated simultaneously, and wherein when the culture water for aquatic species (510) is used as a plant culture water, insulation can be secured to enhance energy efficiency.

The culture water remaining after being supplied to the culture water pipe (200) is drained out through the outlet conduit (320) passing a connection tube (230) connected to the culture water pipe (200), controlling the water pressure of the culture water. The connection tube (230) plays a role of a supporting frame designed to block the front and rear surfaces thereof for holding the culture water therein without flowing out depending on the capacity of the pump (300).

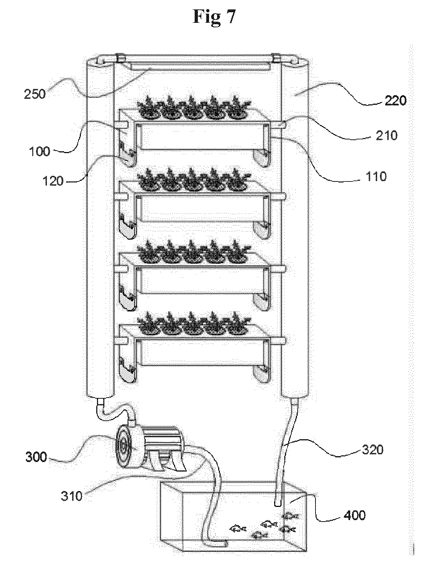

Figure 7 is a perspective view of a vertical type aquaponics plant growing system in accordance with the present invention. A plurality of culture tanks (100) can be connected along the culture tank (100) arrangement axis formed on the outer portion of the culture tank (100), and in an embodiment of the present invention, the culture water pipe (200) plays a role of the culture tank (100) arrangement axis. When the culture tank (100) arrangement axis is vertically erected on the ground surface, a plurality of culture tanks (100) are rotatable with an axis connected to the plant culture water pipe (210), constructing multi stacked culture tanks (100), wherein a lighting source is mounted on the lower portion of the connection tube (230), the culture tank (100) weight, or the root housing box for inducing photosynthesis and being used as heat source.

Figure 8 is a perspective view of a stairway type aquaponics plant growing system in accordance with the present invention, wherein the culture tank (100) arrangement axis is inclined from the ground surface and supported with a frame in order to arrange the culture tanks (100) in a stairway configuration. When the culture tank (100) arrangement axis is inclined from the ground surface, the plant culture water tank pipe plays a role of an supporting axis of the culture tank (100) allowing the culture tank (100) to move facing the upper direction, facilitating efficient use of space even with the use of artificial light source or natural light source.

Figure 9 is a perspective view of a horizontal type aquaponics plant growing system in accordance with the present invention, wherein the culture tank (100) is floated on the water surface by floating material (220) surrounding the outer surface of the culture water pipe (200), so that there is no need of securing space for the culture tank (100) in an aquaculture system, the plurality of culture tanks (100) can be stacked into a multi-floor structure and can be spread horizontally, floating on the water surface, to thereby be used in inland aquacultures or outdoor pond, wherein continuously accumulating nitrate nitrogen in culture water is removed so that the culture water can be reused.

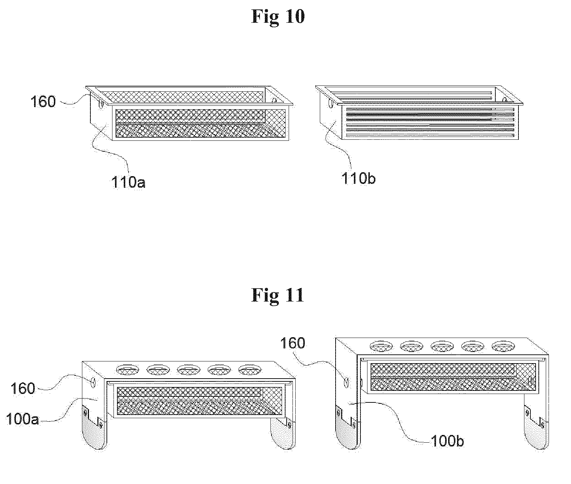

Figure 10 is a perspective view of the root receiving trough in accordance with the present invention, wherein when the culture tank (100) is floated upon the aquaculture water tank, the culture tank (100) can be floated without irrigation by the pump(300) and the root receiving trough can be floated directly after inserreservoir cooling systemtion of culture pots in the absence of additional assembling process. When plant roots are necessary to be protected from aquatic species (510), the root receiving trough where culture water flows without restriction may be engaged on the culture shelf.

The culture water containing sludge accumulated on the inner bottom surface of the aquaculture water tank can be transferred by the pump (300) toward the culture tank (100) engaged with the root receiving trough, for improving fluid communication of culture water in the aquaculture water tank and purification of culture water by plant species.

Figure 11 depicts the culture shelf in accordance with the present invention. When the degree of submerging of root of plant species needs to be adjusted according to the kind of plant species, it can be controlled using the culture shelves having each different height. In case of the culture shelf b (100b), the insertion location of culture pots is located higher than that of the culture shelf a (100a). However, the roots of plant species is less submerged in the culture shelf b (100b), compared with the culture shelf a (100a), since the location of the plant culture water pipe (210) insertion holes (160) remains the same. In case of plant species which has a large-sized root, the depth of the root housing box may be adjusted before engagement of the root receiving trough.

### <Explanation of Reference Number>

10: biofloc tank, 20: tank frame, 30: reservoir tank, 31: flow amount control panel, 32: bio filter
33: diffuser, 34: filter module, 35: submersible pump, 40: automatic feed supplying system 50: reservoir cooling system, 51: cooler, 52: heat exchanger, 53: reservoir cooling pipe
60: reservoir heating system, 61: heater, 62: reservoir heating pipe, 70: air supplying apparatus
71: blower, 72: emergency oxygen supplying system, 73: oxygen generator, 74: oxygen warning system
80: agitating system, 90: outer case, 91: aquaponics culture bed, 92: deep flow technology culture bed
93: nutrient film technology culture bed, 94: seedling culture bed, 95: light source, 96: illumination reflector
97: composite environment controller, 98: light controller system, 99: dew prevention system, 100: culture tank
100a: culture shelf a, 100b: culture shelf b, 110: root bottom support, 110a: root bottom support a
110b: root bottom support b, 120: culture tank weight, 130: root bottom support engagement portion, 140: a membrane pot
150: filler, 160: plant culture water pipe insertion hole, 170: culture pot insertion hole
200: culture water pipe, 210: plant culture water pipe, 220: floating material, 230: connection tube
240: nut, 250: light source, 300: pump, 310: inlet conduit, 320: outlet conduit, 400: aquaculture tank, 500: green vegetables, 510: aquatic species

### Industrial Applicability

The present aquaponics system is able to yearly provide organic agro-fishery product stably without being affected by natural environment and geological conditions by providing sustainable and ecofriendly aquaculture technique in the absence of culture water discharge. The present invention is combined with biofloc aquaculture technique, facilitating closed circuit and low-oxygen ecofriendly aquaculture and expanding foundation of production of high value species by overcoming environmental and geological limitation, to thereby promote exportation of plants.

## Claims

1. An inland biofloc aquaculture system comprising a biofloc tank for growing nutrient microorganisms and aquatic species, said biofloc tank formed on a single-layer or plural layer frame, in connection with a reservoir tank,
wherein culture water containing organic feces generated from aquatic species is filtrated in said reservoir tank to be firstly purified; and
wherein culture water purified in the above first purification process is transferred to an aquaponics plant growing apparatus, to be secondly purified by plant breeding and is supplied back to said biofloc aquaculture system.

2. The biofloc aquaculture system and the aquaponics plant growing apparatus of claim 1, further comprising a monitoring system which monitors aquaculture of aquatic species and plant breeding,
wherein said monitoring system comprises: a water quality measurement device of said biofloc aquaculture system; and a thermo-hygrostat and an illumination regulator of said aquaponics plant growing apparatus, and
wherein said biofloc aquaculture system and said aquaponics plant growing apparatus are driven by the control of said monitoring system.

3. The system of claim 1, wherein said biofloc tank is connected to a cooling reservoir tank equipped with a cooler and a heating reservoir tank equipped with a heater, in order for culture water discharged from said biofloc aquaculture system and said aquaponics plant growing apparatus to be cooled or heated.

4. The system of claim 1, wherein said biofloc tank is formed with an automatic feed supplying system at one side thereof,
said biofloc tank or said reservoir tank comprising: an agitation system having an agitator; and an air supplying apparatus.

5. The system of claim 1, wherein said aquaponics plant growing apparatus comprises a culture bed in its sealed cavity, and wherein said culture bed is at least one selected from a deep flow technology culture bed, a nutrient film technology culture bed, and a seedling culture bed.

6. The system of claim 3, wherein said biofloc tank has a UV coated acrylic transparent window at one lateral side on the wall, a track-like structure formed with a middle partition therein, and an air supplying apparatus having linear or closed polygonal shape at the bottom.

7. The system of claim 1, wherein the aquaponics plant growing apparatus includes a culture tank in which plant species is disposed with culture water in fluid communication, the culture tank comprising:
a plant culture water pipe insertion hole into which a plant culture water pipe is inserted for input and output of culture water on both lateral sides; and a culture tank weight formed on the lower part in order for the culture tank to be rotated based on a horizontal axis of said plant culture water pipe,
wherein the culture water purified while being used for plant breeding is recycled for aquatic species breeding.

8. The system of claim 7, wherein said culture tank further comprises: one or more of culture pot insertion holes for disposing plant species on the upper portion; and a root receiving trough of a predetermined volume, of which the upper surface is open and on which a plant culture water pipe insertion hole for inserting a plant culture water pipe is formed, the root receiving trough being detachably engaged.

9. The system of claim 7, wherein the other side of said plant culture water pipe connected to said culture tank is in connection with a culture water pipe supplying culture water, and said culture water pipe is wrapped with a floating material with a purpose to insulate culture water within the culture water pipe and to make the culture water pipe buoyant in order for said culture tank to float above the water surface.

10. The system of claim 7, wherein said culture pot insertion hole accommodates membrane pots, and plant seedlings are planted within said membrane pots with filler for plant growth.

11. The system of claim 7, wherein one or more of said plant culture water pipe insertion holes is height adjustably formed on the lateral surface of said culture tank to be connected to said plant culture water pipe at a selected height, with a purpose of adjusting the degree of submergence of the roots.
